(19) Europäisches Patentamt / European Patent Office / Office européen des brevets

(11) **EP 3 944 157 A1**

(12) **EUROPEAN PATENT APPLICATION**

(43) Date of publication:
**26.01.2022 Bulletin 2022/04**

(21) Application number: **21179374.0**

(22) Date of filing: **05.05.2016**

(51) International Patent Classification (IPC):
**G06N 3/04** *(2006.01)*     **G06F 15/78** *(2006.01)*
**G06N 3/063** *(2006.01)*     **G06N 3/08** *(2006.01)*

(52) Cooperative Patent Classification (CPC):
**G06N 3/0454; G06F 15/7867; G06N 3/0481;**
**G06N 3/063; G06N 3/084**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2016 CN 201610283838**

(62) Document number(s) of the earlier application(s) in accordance with Art. 76 EPC:
**16899902.7 / 3 451 241**

(71) Applicant: **Cambricon Technologies Corporation Limited**
**Beijing 100190 (CN)**

(72) Inventors:
• **CHEN, Yunji**
  **Beijing, 100190 (CN)**
• **ZHI, Tian**
  **Beijing, 100190 (CN)**
• **LIU, Shaoli**
  **Beijing, 100190 (CN)**
• **GUO, Qi**
  **Beijing, 100190 (CN)**
• **CHEN, Tianshi**
  **Beijing, 100190 (CN)**

(74) Representative: **Huang, Liwei**
**Cäcilienstraße 12**
**40597 Düsseldorf (DE)**

Remarks:
This application was filed on 15-06-2021 as a divisional application to the application mentioned under INID code 62.

(54) **DEVICE AND METHOD FOR PERFORMING TRAINING OF CONVOLUTIONAL NEURAL NETWORK**

(57) A device and a method for performing a convolutional neural network backward training, wherein the device comprises an instruction storage unit, a controller unit, a data access unit, an interconnection unit, a master operation unit and a plurality of slave operation units. For each layer, firstly, the input neuron vectors are selected for data according to the convolution window, then, using the selected data from the previous layer and the data gradient from the next layer as an input to an operation unit of the device, a convolution kernel is computed and updated. Secondly, based on the convolution kernel, the gradient of the data, and a derived function of an activation function, a data gradient output by the device is computed and stored in a memory for outputting to the previous layer for backward propagation computation. The present disclosure temporarily stores the data and the weight parameters involved in the computation on a scratchpad memory, so that the convolutional neural network backward training may be supported flexibly and effectively, and the execution performance of a large number of memory access applications may be improved.

EP 3 944 157 A1

**Description**

## FIELD OF THE INVENTION

The present disclosure relates to a device and a method for performing a convolutional neural network backward training, which are used to perform the convolutional neural network backward training efficiently and flexibly according to a convolutional neural network backward training operation instructions so as to well solve the problem in the current computer field that more and more algorithms contain a large number of convolutional neural network backward training operations.

## BACKGROUND OF THE INVENTION

Convolutional neural network is an efficient recognition algorithm widely used in pattern recognition, image processing and other fields in recent years. It has the characteristics of simple structure, less training parameters, strong adaptability, translation, rotation and scaling. Since the feature detection layer of CNN/DNN learns from the training data, the displayed feature extraction is avoided while using CNN/DNN, and learning is performed implicitly from the training data; furthermore, since the weights of neuron in the same feature mapping plane are the same, the network may learn in parallel, which is also a great advantage of convolutional network as compared with the network in which neurons are connected with each other.

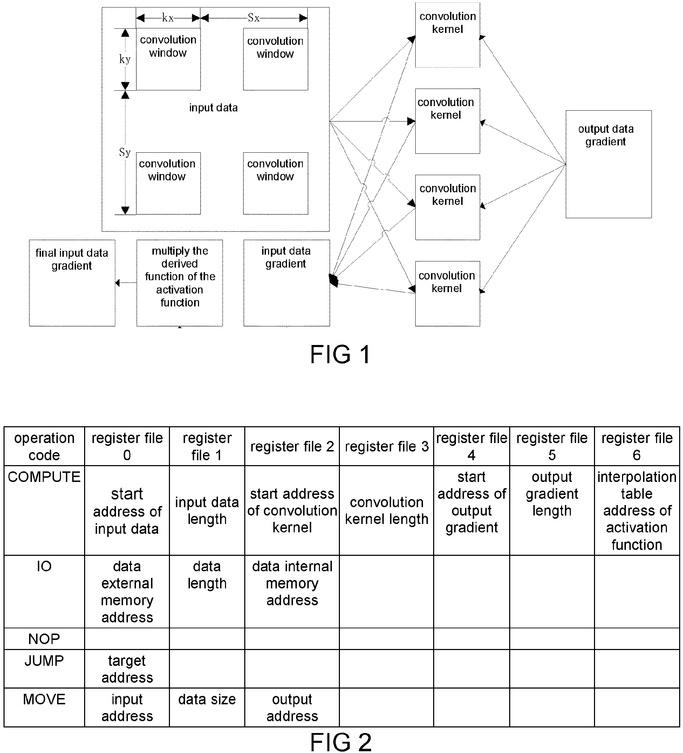

The flow chart for the convolutional neural network training algorithm provided by the present disclosure, as shown in FIG. 1, includes two stages:

Stage one: the stage of forward propagation:

a) taking a sample (X, Yp) from the sample set and entering X into the network;

B) computing the corresponding actual output Op.

At this stage, information is transformed step by step from the input layer to the output layer. This process is also the process that the network performs when it is running normally after training. In this process, the network performs the computation (in fact, the input is multiplied by the weight matrix of each layer to get the final output):

$$Op=Fn(\ldots(F2(F1(XpW(1))W(2))\ldots)W(n))$$

Stage two: the backward propagation stage

a) computing the difference between the actual output Op and the corresponding ideal output Yp;

b) backward propagating to adjust the weight matrix by minimizing the error.

In the field of existing computer applications, applications in relation to the convolution operation are very common. The present disclosure focuses on the convolutional neural network, where the current mainstream devices that may perform such operations are as follows:

In prior art, one known solution for performing a convolutional neural network backward training is to use a general purpose processor. This method performs general-purpose instructions through a general-purpose register file and a general purpose functional component, so as to perform the convolutional neural network backward training. However, one of the disadvantages for this method is that a single general-purpose processor is used for scalar computation, which has low computational performance when performing the convolutional neural network backward training. When multiple general-purpose processors are used to perform in parallel, the mutual communication between general purpose processors may become a performance bottleneck.

In another prior art, a graphics processing unit (GPU) is used for vector computations. The convolutional neural network backward training is performed by using a generic register file and a generic stream processing unit to execute general SIMD instructions. However, in above solutions, the GPU on-chip buffer is too small and requires continuous off-chip data transfer during large-scale convolutional neural network backward training operations. The off-chip bandwidth has become a major performance bottleneck.

## OBJECTS AND SUMMARY OF THE INVENTION

(1) Technical problem to be solved

The purpose of the present disclosure is to provide a device supporting a convolutional neural network backward training so as to solve the problem of being limited to inter-chip communication and insufficient on-chip buffer for the prior art.

(2) Technical solutions

One aspect of the present disclosure provides a device for performing a convolutional neural network backward training. The device includes an instruction storage unit, a controller unit, a data access unit, an interconnection unit, a master operation unit, and a plurality of slave operation units, wherein:

the instruction storage unit is used to store instructions;

the controller unit is used to read the instructions from the instruction storage unit and translates the instructions into a control signal for controlling behaviors of the interconnection unit, the master operation unit and the plurality of slave operation units;

the data access unit performs data or instruction read/write operation between an external address space and the device;

at the stage when the convolutional neural network backward training in each layer begins to compute, the master operation unit transfers input data of the current layer to all the slave operation units through the interconnection unit;

each slave operation unit computes a dot product of its own convolution kernel and the input data as an intermediate result partial sum, and the convolution kernel corresponds to the intermediate result partial sum;

after the computation of the slave operation unit is completed, the interconnection unit splices level by level an output data partial sum of each slave operation unit into an intermediate result of this layer;

the master operation unit completes subsequent computations in the computation process of each layer using the intermediate result of this layer.

Another aspect of the present disclosure provides a method of performing a convolutional neural network instruction.

(3) Beneficial effects

The device for performing the convolutional neural network backward training and supporting instructions provided by the present disclosure store temporarily the input data and the convolution kernel involved in computation to a scratchpad memory. In the case of only sending the same instruction, a convolutional neural network backward training operation unit may more flexibly and effectively support data of different widths and may solve the problem of the correlation in data storage, thereby improving the execution performance when a large number of convolutional neural network operation tasks are included. The instructions employed in the present disclosure have a simplified format, which makes the instructions easy to use and the supported vector length be flexible.
The present disclosure may be applied to the following (including but not limited to) scenarios: data processing; various electronic products such as robots, computers, printers, screeners, telephones, tablets, smart terminals, cell phones, driving recorders, navigators, sensors, webcams, cloud servers, cameras, video cameras, projectors, watches, headphones, mobile storage devices, and wearable devices; various transportation tools such as aircraft, ships, and vehicles; various household appliances such as televisions, air conditioners, microwaves, rice cookers, humidifiers, washing machines, electric lights, gas stoves, and range hoods; and various medical equipment including nuclear magnetic resonance spectrometers, B-ultrasound machines, electrocardiographs.

## BRIEF DESCRIPTION OF FIGURES

Fig. 1 is a flow chart of a convolutional neural network backward training algorithm.

Fig. 2 is a schematic view of instructions supporting a convolutional neural network backward training device provided by the present disclosure.

Fig. 3 is a schematic block view of the overall structure of a device for performing training operation of artificial neural network convolutional layer according to the an embodiment of the present disclosure.

Fig. 4 is a schematic view illustrating the structure of an interconnection unit in the device for performing the training operation of artificial neural network convolutional layer according to an embodiment of the present disclosure.

Fig. 5 is an example block view of the structure of a master operation unit in the device for performing the training operation of artificial neural network convolutional layer according to an embodiment of the present disclosure.

Fig. 6 is an example block view of the structure of a slave operation unit in the device for performing the training operation of artificial neural network convolutional layer according to an embodiment of the present disclosure.

Fig. 7 is an example block view of the process of the training operation for neural network convolutional layer according to an embodiment of the present disclosure.

## DETAILED DESCRIPTION OF THE EMBODIMENTS

The present disclosure provides a convolutional neural network backward training device and supporting instructions, including a storage unit, a register unit, and a convolutional neural network backward training operation unit. The storage unit stores data, an input/output data gradient, and a convolution kernel. The register unit stores an address of data, an address of an input/output data gradient, and an address of the convolution kernel. Firstly, for an input neuron vector, output data from a previous layer is selected based on a convolution window to obtain input data of a current layer, then the convolution kernel is computed and updated based on the obtained input data and the output data gradient from a next layer of the current layer. Secondly, based on the convolution kernel, the output data gradient and a derived function of an activation function, the input data gradient is obtained and stored in a memory for computation of the next layer. The input data gradient is taken as an output data gradient for the next layer. The present disclosure stores temporarily the input data and convolution kernel involved in operation into a scratchpad memory. This allows flexible and effective support of the data with different widths during the convolutional neural network backward training, improving the execution performance of a large number of backward training operation tasks of convolutional neural network.

Fig. 1 is a flow chart of a convolutional neural network backward training algorithm. As shown in the figure, it includes input data of convolutional neural network, a derived function of an activation function, an output data gradient, and a convolution kernel. First, in the computation process of each layer of its backward training, according to the convolution window, the input data corresponding to the operation unit of the current layer is firstly selected from the output data of the previous layer of the current layer, then based on this part of the input data and the data gradient from the next layer of the current layer, a vector-multiplying-vector operation is performed to obtain the gradient of the convolution kernel, which is a scalar. The gradient computation process for the convolution kernel is $dw = \sum x_i ds_i$. In other words, each slave operation unit multiplies the input data x from the previous layer by the output data gradient ds from the next layer and, after the convolution window traverses the data, performs summation to obtain the gradient corresponding to the convolution kernel, and finally the master operation unit solves the square average $c = \sqrt{\sum dw^2}$ corresponding to the gradients of the convolution kernels of all the slave operation units in the current layer. When c is greater than the threshold t, all gradients are scaled according to dw' = $dw/c * t$. In the end, values of the convolution kernel are updated according to the gradient of the scaled convolution kernel.

At the same time, the master operation unit may obtain the data gradient $dx = h(x)\sum w_i ds_i$ to be output to the previous layer according to the convolution kernel and the input data of the current layer, where ds is the output data gradient of the current layer which is related to the input data x of the current layer, w is an element of the convolution kernel data corresponding to the input data x and the output data gradient ds, and h(x) is the value of the derived function of the activation function corresponding to this input data. In other words, a multiply-add operation is performed on the convolution kernel and the data gradient from the next layer. Then the value of the derived function of the activation function corresponding to the input data of the current layer is multiplied to obtain the data gradient output to the previous layer, and finally, the gradient is output to the memory for the backward training operation of the previous layer of convolutional neural network.

The convolution window selects the input data of the same size as the convolution kernel from the input data sets of sizes W and H based on sizes $k_x$ and $k_y$ of the convolution kernel from the very beginning, and according to horizontal shift vectors $S_x$ and $S_y$ of the convolution window, a horizontal shift is performed first, and then a vertical shift is performed to transverse the entire input image.

Fig. 2 is a schematic view of the format of the instruction set provided by the present disclosure. As shown in Fig. 2, a convolutional neural network backward training operation instruction may include 1 operation code and 7 operation fields. The operation code is used to indicate the function of the convolutional neural network backward training operation instruction. The convolutional neural network operation unit may perform the convolutional neural network backward training by identifying the operation code. The operation field is used to indicate the data information of the convolutional neural network backward training operation instruction. The data information may be an immediate or a register number, the data information includes the start address and the data length of the input data, the start address and the data length of the convolution kernel, the start address and the data length of the output gradient, and the type of the activation function.

The instruction set includes convolutional neural network COMPUTE instructions with different functions, a CONFIG instruction, an 10 instruction, a NOP instruction, a JUMP instruction and a MOVE instruction. In one embodiment, the COMPUTE instructions include a convolutional neural network sigmoid instruction, a convolutional neural network TanH instruction, a convolutional neural network ReLU instruction, and a convolutional neural network group instruction.

According to the convolutional neural network sigmoid instruction, the device fetches input data and a convolution kernel of a specified size respectively from a designated address of the scratchpad memory, performs a convolution operation in a convolution operation component, and then outputs the result for a sigmoid activation.

According to the convolutional neural network TanH instruction, the device fetches input data and a convolution kernel of a specified size respectively from a designated address of the scratchpad memory, performs a convolution operation in the convolution operation component, and then outputs the result for a TanH activation.

According to the convolutional neural network ReLU instruction, the device fetches input data and a convolution kernel of a specified size respectively from a designated address of the scratchpad memory, performs a convolution operation in the convolution operation component, and then outputs the result for a ReLU activation.

According to the convolutional neural network group instruction, the device fetches input data and a convolution kernel of a specified size respectively from a designated address of the scratchpad memory, performs a convolution operation in the convolution operation component after dividing the group, and then outputs the result for activation.

The 10 instruction allows for reading in the input data required in operation from the external address space and storing the data back to the external address space after the operation is completed.

The NOP instruction is responsible for clearing control signals in all control signal buffer queues in the current device to ensure that all instructions before the NOP instruction have been instructed. The NOP instruction itself does not contain any operation.

The JUMP instruction is responsible for controlling the jump of the next instruction address to be read from the instruction storage unit for the jump of the control flow.

The MOVE instruction is responsible for moving the data at a certain address space in the device's internal address space to another address in the device's internal address space. This process is independent of the operation unit and does not occupy the resources of the operation unit during the operation.

In order that the objectives, technical schemes and advantages of the present disclosure become more apparent, the present disclosure will be described in more detail in conjunction with specific embodiments and with reference to the drawings and examples above.

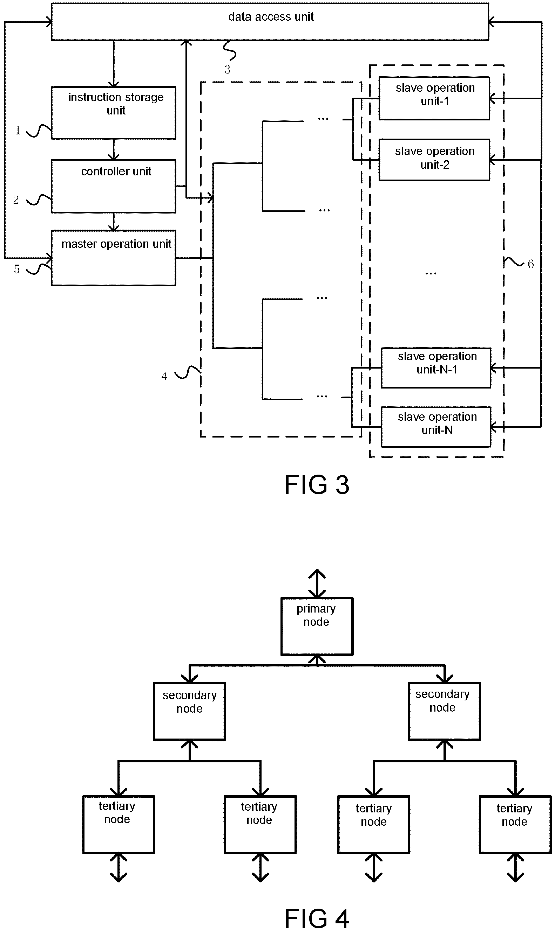

Fig. 3 is a schematic view of the structure for the convolutional neural network backward training device provided by the present disclosure. As shown in Fig. 3, the device includes an instruction storage unit 1, a controller unit 2, a data access unit 3, an interconnection unit 4, a master operation unit 5, and a plurality of slave operation units 6. The instruction storage unit 1, the controller unit 2, the data access unit 3, the interconnection unit 4, the master operation unit 5, and the plurality of slave operation units 6 may implemented by a hardware circuit (e.g. including but not limited to a FPGA, a CGRA, an ASIC, an analog circuit, and a memristor).

The instruction storage unit 1 reads instructions through the data access unit 3 and caches the read instructions.

The controller unit 2 reads the instructions from the instruction storage unit 1 and translates it into a control signal for controlling the behavior of other units including the data access unit 3, the master operation unit 5, and the plurality of slave operation unit 6.

The data access unit 3 may access the external address space and directly reads/writes data, a data gradient, and a convolution kernel value to each caching unit inside the device according to a numerical value such as data size required in the computation process, thereby completing the loading and storage.

The interconnection unit 4 constitutes a data path between the master operation unit and the plurality of slave operation units, and the interconnection unit has any one of the following structures: a tree structure, a ring structure, a grid structure, a hierarchical interconnection, and a bus structure.

Fig. 4 illustrates one structure of the interconnection unit 4. The interconnection unit 4 constitutes a data path between the master operation unit 5 and the plurality of slave operation units 6, and has an H-tree structure. H-tree is a binary tree path formed by a plurality of nodes. Each node equally sends upstream data to two downstream nodes, merges the data returned by the two downstream nodes, and returned the data to the upstream nodes. For example, at the start of the training of the convolutional neural network, neuron data in the master operation unit 5 is sent to each slave operation unit 6 through the interconnection unit 4; after the operation of the slave operation unit 6 is completed, the convolution kernel is first updated, then the value of each neuron output from each operation unit is spliced level by level into a complete vector as an intermediate result vector formed by neurons in the interconnection unit, which is donated as an intermediate result vector. For example, it is assumed that there are a total of N slave operation units in the device, the intermediate result vector is segmented by N, where each segment has N elements, and the i-th slave operation unit computes the i-th element in each segment. N elements are spliced into a vector of length N through the interconnection unit and returned to the master operation unit. Therefore, if there are only N output neurons in the network, each slave operation unit only needs to output the value of a single neuron. If the network has m*N output neurons, each slave operation unit needs to output m neuron values.

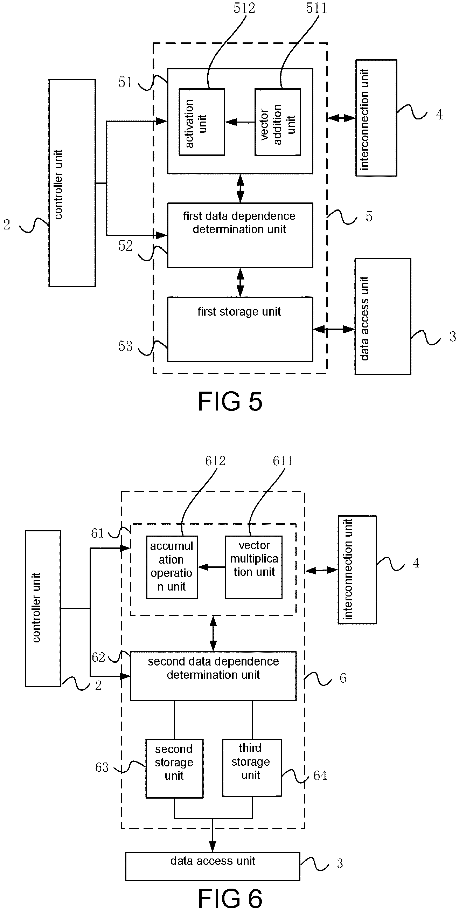

Fig. 5 is an example block view of the structure of the master operation unit 5 in the device for performing the backward training operation of artificial neural network convolutional layer according to the embodiments of the present disclosure. As shown in Fig. 5, the master operation unit 5 includes a first operation unit 51, a first data dependence determination unit 52, and a first storage unit 53.

The first operation unit 51 includes a vector addition unit 511 and an activation unit 512. The first operation unit 51 receives the control signal from the controller unit to complete various operation functions of the master operation unit 5. The vector addition unit 511 is used to implement an addition bias operation in the convolutional neural network backward training. The input of the vector addition unit 511 is a bias vector read from the external address space and an intermediate result vector transmitted back from the slave operation units 6 through the interconnection unit 4, and the output of the vector addition unit 511 is a value obtained by adding the vectors. The activation unit 512 is used to implement a multiplication operation for the derived function of the activation function of artificial neural network convolution layer. The input of the activation unit 512 is the intermediate result transmitted back from the slave operation units 6 through the interconnection unit 4, or an output result of the vector addition unit 511, and the output of the activation unit 512 is an output data gradient vector obtained by multiplying the derived function of the activation function.

The first data dependence determination unit 52 is a port where the first operation unit 51 reads/writes the first storage unit 53 and ensures the reading/writing consistency of the data in a neuron caching unit. At the same time, the first data dependence determination unit 52 is also responsible for sending the read data to the slave operation units through the interconnection unit 4, and sending the output data of the slave operation units 6 directly to the first operation unit 51 through the interconnection unit 4. The instruction output from the controller unit 2 is sent to the first operation unit 51 and the first data dependence determination unit 52 to control their behaviors.

The first storage unit 53 is used to cache the input and output data, the input and output data gradient, and the value of the convolution kernel used by the master operation unit 5 in the computation process.

Fig. 6 is an example block view of the structure of the slave operation units 6 in the device for performing the backward training operation of artificial neural network convolutional layer according to the embodiments of the present disclosure. As shown in Fig. 6, each slave operation unit 6 may include a second operation unit 61, a data dependence determination unit 62, a second storage unit 63 and a third storage unit 64.

The second operation unit 61 first updates the convolution kernel according to the input data gradient and the output data gradient. Then the second operation unit 61 receives a control signal sent by the controller unit 2 and performs a dot product operation. The second operation unit 61 includes a vector multiplication unit 611 and an accumulation unit 612. The vector multiplication unit 611 is used to implement an element-wise multiplication on the neuron vector and the weight vector, and the accumulation unit 612 is used to implement the operation of accumulating each item of the vectors together.

The second data dependence determination unit 62 is responsible for the reading/writing operation on the neuron caching unit in the computation process. Before the read/writing operation, the second data dependence determination unit 62 firstly guarantees that there is no consistency conflict in reading/writing among data used in the instructions. For example, all control signals addressed to the data dependence unit 62 are stored in an instruction queue internal to the data dependence unit 62, and in the instruction queue, if the range of reading data for a read instruction conflicts with the range of writing data for a write instruction located in front of the queue, the read instruction should not be performed until the write instruction on which it depends is performed.

The second storage unit 63 caches input neuron vector data and output neuron value data of the slave operation units 6.

The third storage unit 64 caches the convolution kernel data required by the slave operation units 6 in the computation process. For each slave operation unit 6, only part of convolution kernels corresponding to part of output neurons are stored. The output neurons are segmented according to the number N of the slave operation units, and the convolution kernel corresponding to the n-th output neuron of each segment is stored in the n-th slave operation unit.

The slave operation unit 6 implements the parallelism of the dot product operation in the operation process of the artificial neural network convolution kernel layer. In the case of corresponding to the data within a single convolution window, the process of corresponding to the single convolution kernel in the artificial neural network convolution layer is $s = s(\Sigma wx + b)$, and each artificial neural network convolution layer contains a plurality of convolution kernels. Therefore, according to the convolution kernels, the computation task for the entire convolution layer may be divided into a plurality of independent tasks in parallel, and the output data and the input data are column vectors. Each slave operation unit 6 computes the dot product of the convolution kernel and the input data corresponding to the partial sums in the output data. Each output vector obtained is the value of the final result before the activation, and these partial sums are combined in the interconnection unit 4 one by one and step by step to obtain the final result. Therefore, the computation process becomes a process of partial sum computation in parallel and the subsequent combination process. Each slave operation unit 6 computes an output neuron value, and all of the output neuron values are spliced in the interconnection unit 4 to obtain the intermediate result vector. Each slave operation unit 6 only needs to compute the output neuron value corresponding to this unit in the intermediate result vector y. The interconnection unit 4 combines all the output neuron values obtained from the slave operation unit 6 to obtain the final intermediate result vector y.

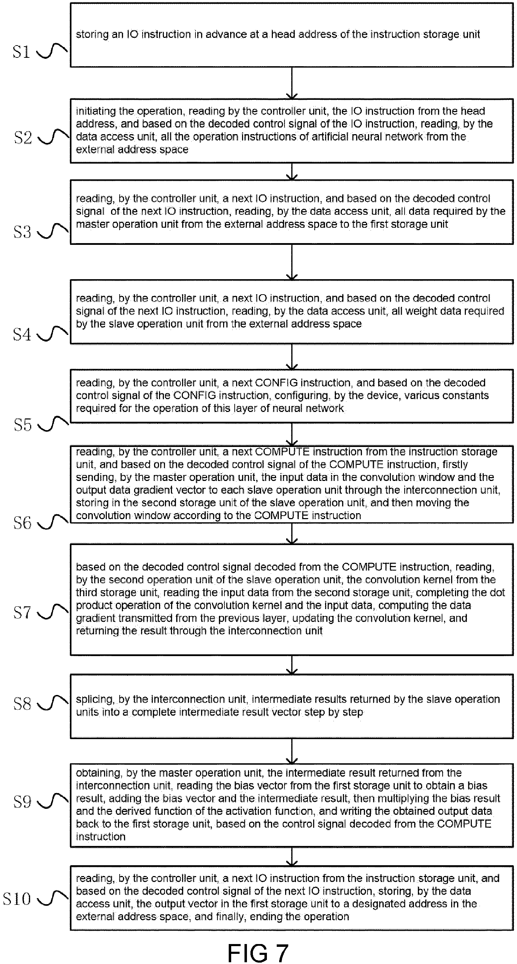

Fig. 7 is a flow chart of performing the convolutional neural network instruction by the convolutional neural network backward training device according to an embodiment of the present disclosure. As shown in Fig. 7, the process of performing the convolutional neural network instruction includes:

at step S1, storing an IO instruction in advance at a head address of the instruction storage unit 1;

at step S2, initiating the operation, reading, by the controller unit 2, the IO instruction from the head address of the instruction storage unit 1, and based on the decoded control signal of the IO instruction, reading, by the data access unit 3, all corresponding operation instructions of the artificial neural network convolutional layer from the external address space, and caching the operation instructions in the instruction storage unit 1;

at step S3, reading, by the controller unit 2, a next IO instruction from the instruction storage unit, and based on the decoded control signal of the next IO instruction, reading, by the data access unit 3, all data (e.g. including input data, interpolation tables, constant tables, and bias data) required by the master operation unit 5 from the external address space to the first storage unit 53 of the master operation unit 5;

at step S4, reading, by the controller unit 2, a next IO instruction from the instruction storage unit, and based on the decoded control signal of the next IO instruction, reading, by the data access unit 3, the convolution kernel data required by the slave operation unit 6 from the external address space;

at step S5, reading, by the controller unit 2, a next CONFIG instruction from the instruction storage unit, and based on the decoded control signal of the CONFIG instruction, configuring, by the device, various constants required for the operation of this layer of neural network, where for example, the first operation unit 51 and the second operation unit 61 configure the value of a register in the first operation unit 51 and the second operation unit 61 according to a parameter in the control signal, and the parameter includes, for example the data required by the activation function;

at step S6, reading, by the controller unit 2, a next COMPUTE instruction from the instruction storage unit, and based on the decoded control signal of the COMPUTE instruction, firstly sending, by the master operation unit 5, the input data of the current layer in the convolution window and the data gradient vector of the subsequent layer to each slave operation unit 6 through the interconnection unit 4, storing in the second storage unit 63 of the slave operation unit 6, and then moving the convolution window according to the COMPUTE instruction;

at step S7, based on a control signal decoded from the COMPUTE instruction, reading, by the second operation unit 61 of the slave operation unit 6, the convolution kernel vector from the third storage unit 64, reading the input data from the second storage unit 63, completing the dot product operation of the convolution kernel vector and the input data, updating the third storage unit 64, computing the output data gradient, and returning the intermediate result through the interconnection unit;

at step S8, splicing, by the interconnection unit, intermediate results returned by the slave operation units 6 into a complete intermediate result vector step by step;

at step S9, obtaining, by the master operation unit 5, the value returned from the interconnection unit 4, reading the bias vector from the first storage unit 53, and adding the bias vector and the vector returned by the interconnection unit 4 through the vector addition unit 512, and then multiplying, by the activation unit 511, the result of the adding and the derived function of the activation function, and writing the final output back to the first storage unit 53, based on the control signal decoded from the COMPUTE instruction;

at step S10, reading, by the controller unit 2, a next IO instruction from the instruction storage unit, and based on the decoded control signal of the IO instruction, storing, by the data access unit 3, the output data gradient in the first storage unit 53 to a designated address in the external address space, and finally, ending the operation.

Through employing a device and an instruction set for performing a backward training operation of artificial neural network convolutional layer, the problems of insufficient CPU and GPU performance and large front-end decoding overhead are solved in the process of performing operation of artificial neural network convolutional layer. It effectively improves the support for backward training operation of artificial neural network convolutional layer.

Through employing a dedicated on-chip buffer for backward training operation of artificial neural network convolutional layer, the reusability of input neuron and convolution kernel data is fully tapped to avoid repeatedly reading these data into the memory, thereby reducing memory access bandwidth and avoiding the problem that the memory bandwidth becomes a bottleneck in the performance of backward training operation for the multi-layer artificial neural networks convolutional layer.

Processes or methods depicted in the preceding figures may be implemented by processing logic including hardware (eg, circuitry, dedicated logic, etc.), firmware, software (eg, software embodied on a non-transitory computer readable medium) or a combination of two of them. Although the processes or methods are described above in terms of certain sequential operations, it should be understood that some of the described operations may be performed in a different order. In addition, some operations may be performed in parallel rather than sequentially.

In the foregoing specification, various embodiments of the present disclosure have been described with reference to specific exemplary embodiments thereof. Obviously, various modifications may be made to the embodiments without departing from the broader spirit and scope of the invention as set forth in the appended claims. Accordingly, the specification and drawings are to be regarded in an illustrative rather than a restrictive sense.

The present disclosure relates to a device for performing a convolutional neural network backward training, which includes an instruction storage unit, a controller unit, a data access unit, an interconnection unit, a master operation unit and a plurality of slave operation units. The instruction storage unit is used to store instructions. The controller unit is used to read the instructions from the instruction storage unit and decodes it into a control signal for controlling behaviors of the data access unit, the master operation unit and the plurality of slave operation units. The data access unit performs data or instruction read/write operation between an external address space and the device. At the stage when the convolutional neural network backward training in each layer begins to compute, the master operation unit transfers input data of this layer to all the slave operation units through the interconnection unit. Each slave operation unit computes a dot product of its own convolution kernel and the input data as an intermediate result partial sum, and the convolution kernel corresponds to the intermediate result partial sum. After the computation of the slave operation unit is completed, the interconnection unit splices level by level an output data partial sum of each slave operation unit into an intermediate result of this layer. The master operation unit completes subsequent computations in the computation process of each layer using the intermediate result of this layer.

In the device as described above, the master operation unit includes a first operation unit and a first storage unit. The first operation unit includes a vector addition unit and an activation unit, and the first operation unit receives the control signal from the controller unit and completes various operation functions of the master operation unit. The vector addition unit is used to implement an addition bias operation in the backward training operation of the convolutional neural network, the input of the vector addition unit is a bias vector read from the external address space, and the intermediate result transmitted back from the slave operation unit through the interconnection unit, and the output the vector addition unit is a bias result of adding the bias vector and the intermediate result. The activation unit is used to implement a multiplication operation for a derived function of a convolution neural network activation function, the input of the activation unit is the intermediate result transmitted back from the slave operation unit through the interconnection unit or a bias result output by the vector addition unit, and the output of the activation unit is output data after the intermediate result or the bias result and the activation function derivative function are multiplied. The first storage unit stores the input/output data, the input/output data gradient, and the convolution kernel used by the master operation unit in the computation process.

In the device as described above, each slave operation unit includes a second operation unit, a second storage unit and a third storage unit. The second operation unit includes a vector multiplication unit and an accumulation unit, where the vector multiplication unit is used to implement an element-wise multiplication of the input data and the convolution kernel, and the accumulation unit is used to implement the operation of adding each item of element-wise multiplication result together. The second storage unit stores the input data and the intermediate result output by the slave operation unit. The third storage unit stores the convolution kernel data required by the slave operation unit in the computation process.

In the device as described above, first, in the computation process of each layer of its backward training, according to the convolution window, the input data corresponding to the operation unit of the current layer is firstly selected from the output data of the previous layer of the current layer, then based on this part of the input data and the data gradient from the next layer of the current layer, a vector-multiplying-vector operation is performed to obtain the gradient of the convolution kernel, which is a scalar. The gradient computation process for the convolution kernel is $dw = \Sigma x_i ds_i$. In other words, each slave operation unit multiplies the input data x from the previous layer by the output data gradient ds from the next layer and, after the convolution window traverses the data, performs summation to obtain the gradient corresponding to the convolution kernel, and finally the master operation unit solves the square average $c = \sqrt{\sum dw^2}$ corresponding to the gradients of the convolution kernels of all the slave operation units in the current layer. When c is greater than the threshold t, all gradients are scaled according to $dw' = dw/c * t$. In the end, values of the convolution kernel are updated according to the gradient of the scaled convolution kernel.

In the device as described above, the master operation unit may obtain the data gradient $dx = h(x)\Sigma w_i ds_i$ to be output to the previous layer according to the input data of the convolution kernel and the current layer, where ds is the output data gradient of the current layer which is related to the input data x of the current layer, w is an element of the convolution kernel data corresponding to the input data x and the gradient ds of the output data, and h(x) is the value of the derived function of the activation function corresponding to this input data. In other words, a multiply-add operation is performed on the convolution kernel and the data gradient from the next layer. Then the value of the derived function of the activation function corresponding to the input data of the current layer is multiplied to obtain the data gradient output to the previous layer, and finally, the gradient is output to the memory for the backward training operation of the previous layer of convolutional neural network.

In the device as described above, the interconnection unit constitutes a data path between the master operation unit and the plurality of slave operation units, and the interconnection unit has any one of the following structures: a tree structure, a ring structure, a grid structure, a hierarchical interconnection, and a bus structure.

In the device as described above, the convolution window, based on the sizes $k_x$ and $k_y$ of the convolution kernel, uses the horizontal shift vectors $S_x$ and $S_y$ of the convolution window on the input data set of size W*H to perform a horizontal shift firstly and perform a vertical shift secondly to transverse the entire data set.

In the device as described above, according to the convolution kernel, the computation task for entire convolution layer may be divided into a plurality of parallel independent tasks. The output data and the input data are column vectors. The slave operation unit computes the dot product of the convolution kernel and the input data corresponding to the partial sums in the output data. These partial sums are combined in the interconnection unit one by one and step by step to obtain the final result.

In the device as described above, the convolutional neural network backward training operation instruction includes 1 operation code and 7 operation fields. The operation code is used to indicate the function of the convolutional neural network backward training operation instruction. The operation field is used to indicate the data information of the convolutional neural network backward training operation instruction. The data information may be an immediate or a register number including the start address and the data length of the input data, the start address and the data length of the convolution kernel, the start address and the data length of the input gradient, and the type of the activation function.

The present disclosure also relates to a method for performing a convolutional neural network instruction, which includes:

at step S1, storing an IO instruction in advance at a head address of the instruction storage unit;

at step S2, initiating the operation, reading, by the controller unit, the 10 instruction from the head address of the instruction storage unit, and based on the decoded control signal of the 10 instruction, reading, by the data access unit, all corresponding operation instructions of the artificial neural network convolutional layer from the external address space, and caching the operation instructions in the instruction storage unit;

at step S3, reading, by the controller unit, a next 10 instruction from the instruction storage unit, and based on the decoded control signal of the next 10 instruction, reading, by the data access unit, all data required by the master operation unit from the external address space to the first storage unit of the master operation unit;

at step S4, reading, by the controller unit, a next 10 instruction from the instruction storage unit, and based on the decoded control signal of the next 10 instruction, reading, by the data access unit, the convolution kernel data required by the slave operation unit from the external address space;

at step S5, reading, by the controller unit, a next CONFIG instruction from the instruction storage unit, and based on the decoded control signal of the CONFIG instruction, configuring, by the device, various constants required for the operation of this layer of neural network;

at step S6, reading, by the controller unit, a next COMPUTE instruction from the instruction storage unit, and based on the decoded control signal of the COMPUTE instruction, firstly sending, by the master operation, the input data of the current layer in the convolution window and the data gradient vector of the subsequent layer to each slave operation unit through the interconnection unit, storing in the second storage unit of the slave operation unit, and then moving the convolution window according to the COMPUTE instruction;

at step S7, based on a decoded control signal of the COMPUTE instruction, reading, by the second operation unit of the slave operation unit, the convolution kernel vector from the third storage unit, reading the input data from the second storage unit, completing the dot product operation of the convolution kernel vector and the input data, updating the third storage unit, computing the output data gradient, and returning the intermediate result through the interconnection unit;

at step S8, splicing, by the interconnection unit, intermediate results returned by the slave operation units into a complete intermediate result vector step by step;

at step S9, obtaining, by the master operation unit, the value returned from the interconnection unit, reading the bias vector from the first storage unit, and adding the bias vector and the vector returned by the interconnection unit through the vector addition unit, and then multiplying, by the activation unit, the result of the adding and the derived function of the activation function, and writing the final output back to the first storage unit, based on the control signal decoded from the COMPUTE instruction;

at step S10, reading, by the controller unit, a next IO instruction from the instruction storage unit, and based on the decoded control signal of the next IO instruction, storing, by the data access unit, the output data gradient in the first storage unit to a designated address in the external address space, and finally, ending the operation.

## Claims

1. A method for performing a convolutional neural network backward training using an operation device, wherein the operation device comprises an instruction storage unit (1), a controller unit (2), a data access unit (3), an interconnection unit (4), a master operation unit (5), and a plurality of slave operation units (6), **characterized in that**, the method comprises:

   at step S3, reading, by the controller unit (2), a first IO instruction from the instruction storage unit (1), and based on a control signal decoded from the first IO instruction, reading, by the data access unit (3), all input data required by the master operation unit (5) from an external address space to a first storage unit (53) of the master operation unit 5;
   at step S4, reading, by the controller unit (2), a second IO instruction from the instruction storage unit (1), and based on a control signal decoded from the second IO instruction, reading, by the data access unit (3), convolution kernel data required by a slave operation unit (6) from the external address space, and storing the convolution kernel data in a third storage unit (64) of the slave operation unit (6);
   at step S6, reading, by the controller unit (2), a COMPUTE instruction from the instruction storage unit, decoding the COMPUTE instruction to a control signal, and based on the decoded control signal, sending, by the master operation (5), input neuron data of a current layer in a convolution window and a data gradient vector of a subsequent layer to each slave operation unit (6) through the interconnection unit (4), storing in a second storage unit (63) of the slave operation unit 6, and then moving, by the master operation (5), the convolution window according to the COMPUTE instruction;
   at step S7, based on the decoded control signal of the COMPUTE instruction from the controller unit (2), reading, by a second operation unit (61) of the slave operation unit (6), a convolution kernel vector from the third storage unit (64), reading input data from the second storage unit (63), performing a dot product operation of the convolution kernel vector and the data gradient vector of the subsequent layer, and returning an intermediate result through the interconnection unit (4);
   at step S8, adding, by the interconnection unit (4), the intermediate results returned by each slave operation unit (6), and returning a result to the master operation unit (5);

at step S9, obtaining, by the master operation unit (5), the result returned from the interconnection unit (4), reading a bias vector from the first storage unit (53), adding the bias vector and the result returned by the interconnection unit (4), and activating the result of the adding, and writing a final output back to the first storage unit (53), based on the control signal decoded from the COMPUTE instruction.

2. The method of claim 1, **characterized in that**, the method further comprises: at step S5, configuring, for a first operation unit (51)and a second operation unit (61), various parameters required for the operation based on the control signal obtained by decoding the CONFIG instruction by the controller unit (2).

3. The method of claim 1 or 2, **characterized in that**, the method further comprises:

multiplying, by each slave operation unit (6), input neuron data x from a previous layer by an output neuron data gradient $ds$ from a next layer and, after the convolution window traverses the data, performing summation to obtain a gradient dw corresponding to the convolution kernel; and

solving, by the master operation unit, a square average $c = \sqrt{\sum dw^2}$ corresponding to gradients of convolution kernels of all the slave operation units in the current layer, when c is greater than a threshold t, scaling all of the gradients according to $dw' = dw/c * t$, and
updating values of the convolution kernel according to the gradients of the scaled convolution kernel.

4. The method of any one of claims 1 to 3, **characterized in that**, subsequent operations performed by the master operation unit further comprises:

obtaining a data gradient dx = $h(x)\sum w_i ds_i$ to be output to the previous layer according to the convolution kernel and the input neuron data of the current layer, wherein ds is the output neuron data gradient of the current layer which is related to the input neuron data x of the current layer, w is an element of the convolution kernel data corresponding to the input neuron data x and the output neuron data gradient ds, and h(x) is a value of a derived function of an activation function corresponding to the input neuron data; and
multiplying the value of the derived function of the activation function corresponding to the input data of the current layer to obtain the data gradient output to the previous layer.

5. The method of any one of claims 1 to 4, **characterized in that**, an instruction set supported by the operation device includes convolutional neural network COMPUTE instructions with different functions, and the COMPUTE instructions include at least one of a convolutional neural network sigmoid instruction, a convolutional neural network TanH instruction, a convolutional neural network ReLU instruction, and a convolutional neural network group instruction, wherein the method comprises:

according to the convolutional neural network sigmoid instruction, fetching an output neuron data gradient and a convolution kernel of a specified size respectively from a designated address of the data access unit, performing a backward operation, by a convolution operation component, on a convolution layer according to the type of the activation function, namely sigmoid, and writing back an output result to the designated address of the data access unit after performing an operation to the output result according to the sigmoid function;
according to the convolutional neural network TanH instruction, fetching an output neuron data gradient and a convolution kernel of a specified size respectively from a designated address of the data access unit, performing a backward operation, by the convolution operation component, on the convolution layer according to the type of the activation function, namely TanH, and writing back an output result to the designated address of the data access unit after performing an operation to the output result according to the TanH function;
according to the convolutional neural network ReLU instruction, fetching an output neuron data gradient and a convolution kernel of a specified size respectively from a designated address of the data access unit, performing a backward operation, by the convolution operation component, on the convolution layer according to the type of the activation function, namely ReLU, and writing back an output result to the designated address of the data access unit after performing an operation to the output result according to the ReLU function;
according to the convolutional neural network group instruction, fetching an output neuron data gradient and a convolution kernel of a specified size respectively from a designated address of the data access unit, performing a convolution operation by the convolution operation component based on a divided the group of the fetched output neuron data gradient and convolution kernel, and then performing an activation operation on the convolution output result.

**6.** The method of any one of claims 1 to 5, **characterized in that**, the COMPUTE instructions include an operation code and an operation field, wherein the operation code is configured to indicate the function of a convolutional neural network backward training operation instruction, and the operation field is configured to indicate data information of the convolutional neural network backward training operation instruction, wherein the data information is specified as an immediate or a register number, the data information includes a start address and a data length of the input neuron data, a start address and a data length of the convolution kernel, a start address and a data length of the output neuron gradient, and the type of the activation function.

**7.** The method of any one of claims 1 to 6, **characterized in that**, the first storage unit (53), the second storage unit (63) and the third storage unit (64) are scratchpad memories.

**8.** The method of any one of claims 1 to 7, **characterized in that**, the master operation unit (5) includes the first operation unit (51) and the first storage unit (53), wherein

the first operation unit (51) includes a vector addition unit and an activation unit, and receives a control signal from the controller unit to complete various operation functions of the master operation unit (5);
the vector addition unit is configured to implement an addition bias operation in the convolutional neural network backward training, an input of the vector addition unit is a bias vector read from the external address space and an intermediate result transmitted back from the slave operation unit (6) through the interconnection unit (4), and an output of the vector addition unit is a value obtained by adding the bias vector and the intermediate result; the activation unit is configured to implement a multiplication operation for the derived function of the activation function of the convolutional neural network, an input of the activation unit is the intermediate result transmitted back from the slave operation unit (6) through the interconnection unit (4), or a bias result output from the vector addition unit, and an output of the activation unit is output neuron data obtained by multiplying the intermediate result or the bias result by the derived function of the activation function; and the first storage unit (53) is configured to store the input and output neuron data, the input and output neuron data gradient, and the value of the convolution kernel used by the master operation unit in computation.

**9.** The method of any one of claims 1 to 8, **characterized in that**, each slave operation unit (6) includes a second operation unit (61), a second storage unit (63) and a third storage unit (64),

the second operation unit (61) includes a vector multiplication unit and an accumulation unit, wherein the vector multiplication unit is configured to implement an element-wise multiplication on the input neuron vector and the convolution kernel, and the accumulation unit is configured to accumulate each item of results of the element-wise multiplication together;
the second storage unit (63) is configured to cache input neuron vector data and the intermediate result output by the slave operation unit (6); and
the third storage unit (64) is configured to cache the convolution kernel data required by the slave operation unit (6) in the computation.

**10.** The method of any one of claims 1 to 9, **characterized in that**,

the master operation unit (5) also includes a first data dependence determination unit (52), the first data dependence determination unit (52) is a port where the first operation unit (51) reads/writes the first storage unit (53) and ensures the reading/writing consistency of the data in a neuron caching unit, and the first data dependence determination unit (52) is also configured to send the read data to the slave operation unit (6) through the interconnection unit (4), and send output data of the slave operation unit (6) directly to the first operation unit (51) through the interconnection unit (4).

**11.** The method of any one of claims 1 to 10, **characterized in that**,
each slave operation unit (6) includes a data dependence determination unit (62), the data dependence determination unit (62) is configured to perform reading/writing operation on the second storage unit (63) in the computation, and configured to guarantee that there is no consistency conflict in reading/writing among data used in the instructions before performing read/writing operation.

**12.** An operation device for performing a convolutional neural network backward training, **characterized in that**, the operation device comprises an instruction storage unit (1), a controller unit (2), a data access unit (3), an interconnection unit (4), a master operation unit (5), and a plurality of slave operation units (6), wherein the operation device is configured to execute the method of any one of claims 1 to 11.

13. The operation device of claim 12, **characterized in that**, the master operation unit (5) includes a first operation unit (51) and a first storage unit (53), wherein

the first operation unit (51) includes a vector addition unit and an activation unit, and receives a control signal from the controller unit to complete various operation functions of the master operation unit (5);
the vector addition unit is configured to implement an addition bias operation in the convolutional neural network backward training, an input of the vector addition unit is a bias vector read from an external address space and an intermediate result transmitted back from the slave operation unit (6) through the interconnection unit (4), and an output of the vector addition unit is a value obtained by adding the bias vector and the intermediate result;
the activation unit is configured to implement a multiplication operation for the derived function of the activation function of the convolutional neural network, an input of the activation unit is the intermediate result transmitted back from the slave operation unit (6) through the interconnection unit (4), or a bias result output from the vector addition unit, and an output of the activation unit is output neuron data obtained by multiplying the intermediate result or the bias result by the derived function of the activation function; and the first storage unit (53) is configured to cache the input and output neuron data, the input and output neuron data gradient, and the value of the convolution kernel used by the master operation unit in computation.

14. The operation device of claim 12 or 13, **characterized in that**,

each slave operation unit (6) includes a second operation unit (61), a second storage unit (63) and a third storage unit (64),
the second operation unit (61) includes a vector multiplication unit and an accumulation unit, wherein the vector multiplication unit is configured to implement an element-wise multiplication on the input neuron vector and the convolution kernel, and the accumulation unit is configured to accumulate each item of results of the element-wise multiplication together;
the second storage unit (63) is configured to cache input neuron vector data and the intermediate result output by the slave operation unit (6); and
the third storage unit (64) is configured to cache the convolution kernel data required by the slave operation unit (6) in the computation.

15. An electronic device, **characterized in that**, the electronic device comprises the operation device of claim 12.

FIG 1

| operation code | register file 0 | register file 1 | register file 2 | register file 3 | register file 4 | register file 5 | register file 6 |
|---|---|---|---|---|---|---|---|
| COMPUTE | start address of input data | input data length | start address of convolution kernel | convolution kernel length | start address of output gradient | output gradient length | interpolation table address of activation function |
| IO | data external memory address | data length | data internal memory address | | | | |
| NOP | | | | | | | |
| JUMP | target address | | | | | | |
| MOVE | input address | data size | output address | | | | |

FIG 2

FIG 3

FIG 4

512    511

51

512 activation unit    511 vector addition unit

interconnection unit — 4

2 — controller unit

first data dependence determination unit — 5

52

first storage unit

data access unit — 3

53

## FIG 5

612    611

61

612 accumulation operation unit    611 vector multiplication unit

interconnection unit — 4

controller unit

62

second data dependence determination unit — 6

2

second storage unit — 63    third storage unit — 64

data access unit — 3

## FIG 6

S1 ⟋⟍ | storing an IO instruction in advance at a head address of the instruction storage unit

S2 ⟋⟍ | initiating the operation, reading by the controller unit, the IO instruction from the head address, and based on the decoded control signal of the IO instruction, reading, by the data access unit, all the operation instructions of artificial neural network from the external address space

S3 ⟋⟍ | reading, by the controller unit, a next IO instruction, and based on the decoded control signal of the next IO instruction, reading, by the data access unit, all data required by the master operation unit from the external address space to the first storage unit

S4 ⟋⟍ | reading, by the controller unit, a next IO instruction, and based on the decoded control signal of the next IO instruction, reading, by the data access unit, all weight data required by the slave operation unit from the external address space

S5 ⟋⟍ | reading, by the controller unit, a next CONFIG instruction, and based on the decoded control signal of the CONFIG instruction, configuring, by the device, various constants required for the operation of this layer of neural network

S6 ⟋⟍ | reading, by the controller unit, a next COMPUTE instruction from the instruction storage unit, and based on the decoded control signal of the COMPUTE instruction, firstly sending, by the master operation unit, the input data in the convolution window and the output data gradient vector to each slave operation unit through the interconnection unit, storing in the second storage unit of the slave operation unit, and then moving the convolution window according to the COMPUTE instruction

S7 ⟋⟍ | based on the decoded control signal decoded from the COMPUTE instruction, reading, by the second operation unit of the slave operation unit, the convolution kernel from the third storage unit, reading the input data from the second storage unit, completing the dot product operation of the convolution kernel and the input data, computing the data gradient transmitted from the previous layer, updating the convolution kernel, and returning the result through the interconnection unit

S8 ⟋⟍ | splicing, by the interconnection unit, intermediate results returned by the slave operation units into a complete intermediate result vector step by step

S9 ⟋⟍ | obtaining, by the master operation unit, the intermediate result returned from the interconnection unit, reading the bias vector from the first storage unit to obtain a bias result, adding the bias vector and the intermediate result, then multiplying the bias result and the derived function of the activation function, and writing the obtained output data back to the first storage unit, based on the control signal decoded from the COMPUTE instruction

S10 ⟋⟍ | reading, by the controller unit, a next IO instruction from the instruction storage unit, and based on the decoded control signal of the next IO instruction, storing, by the data access unit, the output vector in the first storage unit to a designated address in the external address space, and finally, ending the operation

## FIG 7

Europäisches
Patentamt
European
Patent Office
Office européen
des brevets

# EUROPEAN SEARCH REPORT

**Application Number**

EP 21 17 9374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAEMAELAEINEN T ET AL: "TUTNC: A GENERAL PURPOSE PARALLEL COMPUTER FOR NEURAL NETWORK COMPUTATIONS", MICROPROCESSORS AND MICROSYSTEMS, IPC BUSINESS PRESS LTD. LONDON, GB, vol. 19, no. 8, 1 October 1995 (1995-10-01), pages 447-465, XP000591545, ISSN: 0141-9331, DOI: 10.1016/0141-9331(96)82010-2 * the whole document * | 1-15 | INV.<br>G06N3/04<br>G06F15/78<br>G06N3/063<br>G06N3/08 |
| A | KLAPURI H ET AL: "MAPPING ARTIFICIAL NEURAL NETWORKS TO A TREE SHAPE NEUROCOMPUTER", 1 September 1996 (1996-09-01), MICROPROCESSORS AND MICROSYSTEMS, IPC BUSINESS PRESS LTD. LONDON, GB, PAGE(S) 267 - 276, XP000639808, ISSN: 0141-9331 * the whole document * | 1-15 | |
| X | KOLINUMMI P ET AL: "PARNEU: general-purpose partial tree computer" In: "MICROPROCESSORS AND MICROSYSTEMS", 1 March 2000 (2000-03-01), Elsevier Science, XP004203016, ISSN: 0141-9331 pages 23-42, DOI: https://doi.org/10.1016/S0141-9331(99)00075-7, * the whole document * | 1-15 | **TECHNICAL FIELDS SEARCHED (IPC)**<br><br>G06F |

The present search report has been drawn up for all claims

| Place of search | Date of completion of the search | Examiner |
|---|---|---|
| The Hague | 9 December 2021 | Wirtz, Hanno |